# EUROPÄISCHE PATENTSCHRIFT

(11) **EP 2 637 902 B1**
(45) Veröffentlichungstag und Bekanntmachung des Hinweises auf die Patenterteilung: **01.04.2015**
(21) Anmeldenummer: 11764206.6
(22) Anmeldetag: 04.10.2011
(51) Int. Cl.: B60R 22/41

(54) **VERRIEGELUNGSEINHEIT MIT ENDVERRIEGELUNGSSPERRE FUER EINEN GURTBANDAUFROLLER**
LOCKING UNIT WITH END-POSITION LOCKING CATCH FOR A SEATBELT RETRACTOR
UNITÉ DE VERROUILLAGE À BLOCAGE DE VERROUILLAGE FINAL POUR UN ENROULEUR DE SANGLE

(30) Priorität: 11.11.2010 AT 6942010
(43) Veröffentlichungstag der Anmeldung: 18.09.2013
(73) Patentinhaber: Fasching Salzburg GmbH, 5020 Salzburg (AT)
(72) Erfinder: FASCHING, Thomas, A-5020 Salzburg (AT)
(74) Vertreter: Röggla, Harald
(86) Internationale Anmeldenummer: PCT/EP2011/067327
(87) Internationale Veröffentlichungsnummer: WO 2012/062516

(56) Entgegenhaltungen:
- DE-A1-102008 053 853

## Beschreibung

Die Erfindung betrifft eine Verriegelungseinheit für einen Sicherheitsgurtaufroller, die an einem Ende einer Gurtbandspule des Sicherheitsgurtaufrollers vorgesehen ist, auf der ein Sicherheitsgurt aufgerollt ist, so dass, wenn der Sicherheitsgurt schnell abgerollt wird, ein Verriegelungsarm eines Verriegelungshebels mit einem Innenzahnrad verriegelt wird, wodurch die Gurtbandspule verriegelt ist, wobei die Verriegelungseinheit folgende Elemente aufweist:
den Verriegelungshebel mit einem von der Mitte der Gurtbandspule entfernt angeordneten Drehpunkt, einem Betätigungsarm und dem Verriegelungsarm;
eine Auslöseeinheit mit einem Trägheitsgewicht, einer Gegendruckfeder und einem Übertragungsarm, der in den Betätigungsarm eingreift, wobei die Auslöseeinheit beim starken Beschleunigen des Abrollens des Sicherheitsgurtes, bedingt durch die entgegen der Federkraft der Gegendruckfeder wirkende Trägheitskraft des Trägheitsgewichts, zum Verdrehen des Verriegelungshebels um den Drehpunkt und zum Verriegeln des Verriegelungsarms mit dem um den Verriegelungshebel angeordneten stillstehenden Innenzahnrad ausgebildet ist.

Eine solche Verriegelungseinheit ist aus dem Dokument DE 10 2008 053 853 A1 bekannt, in der ein Sicherheitsgurtsystem und dessen Funktionen im Detail beschrieben sind. Die bekannte Verriegelungseinheit dient dazu, das Abrollen des Sicherheitsgurtes eines Kraftfahrzeuges zu unterbrechen, wenn es zu einer Fahrzeugkollision gekommen ist und der angeschnallte Fahrgast nach vorne geschleudert wird. In diesem Fall wird die Abrollgeschwindigkeit des Sicherheitsgurts schneller erhöht als dies durch Sicherheitsstandards festgelegt ist. Eine Auslöseeinheit der bekannten Verriegelungseinheit weist ein Trägheitsgewicht und eine Spiralfeder als Gegendruckfeder auf. Bei einer starken Beschleunigung der Gurtbandspule verzögert das Trägheitsgewicht die Beschleunigung der Auslöseeinheit, wodurch die Trägheitskraft des Trägheitsgewichts entgegen der Federkraft der Gegendruckfeder wirkt. Ab einer durch das Trägheitsgewicht und die Federkraft festgelegten Maximalbeschleunigung des Abrollvorganges kommt es dazu, dass der Verriegelungshebel entgegen der Federkraft so weit um den Drehpunkt verdreht wird, dass der Verriegelungsarm in das Innenzahnrad eingreift und die Gurtbandspule gegen weiteres Abrollen des Sicherheitsgurtes verriegelt.

In dem vorgenannten Dokument ist bereits auf das Problem der Endverriegelung des Sicherheitsgurtes hingewiesen, die auftritt, wenn der Sicherheitsgurt aufgerollt wird und beispielsweise die Gurtzunge an einem Fahrzeugteil anschlägt. Bei diesem plötzlichen Abstoppen des Aufrollens bewirkt das Trägheitsgewicht, dass die Auslöseeinheit den Sicherheitsgurt verriegelt. Wenn diese Verriegelung bei praktisch vollständig auf der Gurtbandspule aufgerolltem Sicherheitsgurt erfolgt, dann kann die Verriegelung durch Entspannen des Sicherheitsgurts nicht mehr gelöst werden, worauf der Sicherheitsgurtaufroller von einer Fachwerkstätte entriegelt werden muss.

Um die Endverriegelung des Sicherheitsgurtes zu vermeiden, weist der bekannte Sicherheitsgurtaufroller eine Verriegelungseinheit mit Endverriegelungssperre auf, die durch ein Planetengetriebe mit zwei Zahnrädern und zwei Verriegelungszapfen gebildet ist. Beim Aufrollen des Sicherheitsgurtes dreht das Planetengetriebe die Verriegelungszapfen in eine Position, in der der Vernegelungsarm des Verriegelungshebels blockiert wird und ein Verdrehen des Verriegelungshebels und somit ein Verriegeln des Verriegelungsarms mit dem Innenzahnrad verhindert wird.

Bei der bekannten Verriegelungseinheit für einen Sicherheitsgurtaufroller hat sich als Nachteil erwiesen, dass die Konstruktion der Endverriegelungssperre durch das Planetengetriebe aufwendig und somit einerseits fehleranfällig und andererseits auch teuer in der Herstellung ist.

Der Erfindung liegt die Aufgabe zugrunde, eine verbesserte Verriegelungseinheit für einen Sicherheitsgurtaufroller zu schaffen, die das Problem der Endvernegelung beim Aufrollen des Sicherheitsgurtes mit einer einfachen und zuverlässigen Konstruktion löst.

Erfindungsgemäß wird diese Aufgabestellung dadurch gelöst, dass zwischen Verriegelungshebel und Innenzahnrad ein Abdeckring vorgesehen ist, der beim Aufrollen des Sicherheitsgurtes in eine Abdeckposition verdrehbar ist, in der der Abdeckring den Bereich zwischen Verriegelungsarm und Innenzahnrad zumindest teilweise abdeckt, um ein Verriegeln zu verhindern, und der beim Abrollen des Sicherheitsgurtes in eine Freigabeposition verdrehbar ist, in der der Abdeckring den Bereich zwischen Verriegelungsarm und Innenzahnrad freigibt, um ein Verriegeln zu ermöglichen.

Hierdurch ist der Vorteil erhalten, dass mit einem einfachen Abdeckring, je nach Drehrichtung der Gurtbandspule des Sicherheitsgurtaufrollers, der Verriegelungsarm in das Innenzahnrad zum Verriegeln eingreifen kann oder von dem Abdeckring daran gehindert wird.

Weitere vorteilhafte Ausgestaltungen der Erfindung werden im Folgenden anhand der Figuren näher erläutert.
Figur 1 zeigt einen Sicherheitsgurtaufroller mit Verriegelungseinheit in einer Explosionszeichnung.
Figur 2 zeigt das Innenzahnrad, den Abdeckring und den Verriegelungshebel der Verriegelungseinheit gemäß Figur 1.
Figur 3 zeigt die Auslöseeinheit der Verriegelungseinheit gemäß Figur 1.
Figur 4 zeigt den zusammengebauten Sicherheitsgurtaufroller gemäß Figur 1 beim Aufrollen des Sicherheitsgurtes.
Figur 5 zeigt den zusammengebauten Sicherheitsgurtaufroller gemäß Figur 1 beim Abrollen des Sicherheitsgurtes.

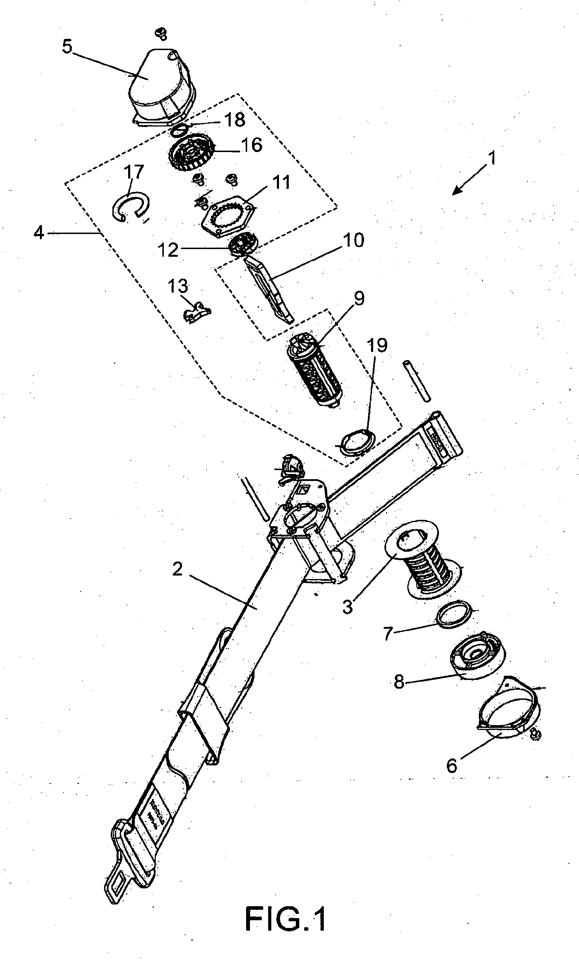

Figur 1 zeigt einen Sicherheitsgurtaufroller 1 des Sicherheitsgurtsystems eines Kraftfahrzeuges in einer Explosionszeichnung. Aufgabe des Sicherheitsgurtaufrollers 1 ist es, den Sicherheitsgurt 2 auf einer Gurtbandspule 3 aufzurollen und im Fall einer Fahrzeugkollision das Abrollen des Sicherheitsgurts 2 zu stoppen. Hierfür weist der Sicherheitsgurtaufroller 1 eine Verriegelungseinheit 4 auf, deren Einzelteile und Funktion nachfolgend näher erläutert sind.

Der Sicherheitsgurtaufroller 1 weist weiters ein Gehäuse mit zwei Gehäuseteilen 5 und 6 sowie eine Triebfeder 7 samt Federgehäuse 8 zum Aufrollen des Sicherheitsgurts 2 auf. In der Gurtbandspule 3 ist eine Gurtbandwelle 9 vorgesehen, durch die ein Einsatzteil 10 gesteckt wird, wobei sowohl die Gurtbandwelle 9 als auch der Einsatzteil 10 formschlüssig in der Gurtbandspule 3 sitzen und mit der Gurtbandspule 3 mitgedreht werden.

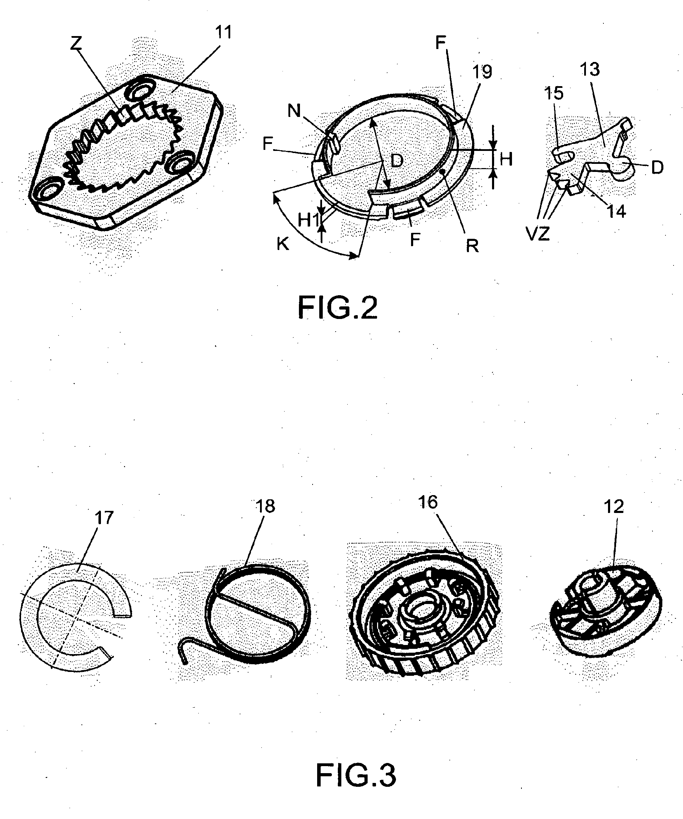

Die in den Figuren 2 und 3 zum Teil näher dargestellte Verriegelungseinheit 4 ist an einem Ende der Gurtbandspule 3 auf dem Einsatzteil 10 formschlüssig montiert. Die Verriegelungseinheit 4 weist einen Zahnring 11 mit Innenzahnrad Z auf, wobei der Zahnring 11 mit dem Gehäuse verbunden ist und sich folglich beim Auf- und Abrollen des Sicherheitsgurtes 2 nicht mit dreht. In der Gurtbandwelle 9 ist von der Mitte der Gurtbandspule 3 beziehungsweise von ihrer Drehachse entfernt eine Vertiefung vorgesehen, in der ein Drehpunkt D eines Verriegelungshebels 13 drehbar gelagert ist. Der Verriegelungshebel 13 kann um den Drehpunkt D in eine Verriegelungsposition und in eine Freigabeposition verdreht werden. In der Verriegelungsposition blockiert die Verriegelungseinheit 4 über den Einsatzteil 10 und die Gurtbandwelle 9 das Drehen der Gurtbandspule 3, wohingegen sich die Gurtbandspule 3 in der Freigabeposition frei drehen kann.

Der Verriegelungshebel 13 weist weiters einen Verriegelungsarm 14 auf, an dessen Ende drei Verriegelungszähne VZ vorgesehen sind. Wenn der Verriegelungshebel 13 in seine Verriegelungsposition verstellt ist, dann greifen die drei Verriegelungszähne VZ in drei Zahnlücken des Innenzahnrads Z und blockieren so die Gurtbandspule 3. Der Verriegelungshebel 13 weist weiters einen Betätigungsarm 15 auf, in den ein Übertragungsarm der in Figur 3 dargestellten Auslöseeinheit eingreift.

Die Auslöseeinheit ist durch ein Zahnrad 16, ein Trägheitsgewicht 17 und eine Drehfeder 18, als Sensitivitätsfeder des Auslösemechanismus, und einen Mitnehmer 12 gebildet. Der mit dem Verriegelungsarm 15 des Verriegelungshebels 13 im Eingriff befindliche Übertragungsarm ist auf der Unterseite des in der Figur 3 dargestellten Zahnrads 16 vorgesehen. Das Zahnrad 16 sitzt auf dem Mitnehmer 12, der seinerseits auf dem Einsatzteil 10 sitzt und sich über die Gurtbandwelle 9 mit der Gurtbandspule 3 mitdreht. Das Zahnrad 16 ist in dem Mitnehmer 12 drehbar gelagert, wobei der Drehbereich auf einen bestimmten Winkelbereich eingeschränkt ist, der gerade dem Verstellweg des Verriegelungshebels 13 zwischen seiner Verriegelungsposition und seiner Freigabeposition entspricht. Die Drehfeder 18 ist zwischen dem Mitnehmer 12 und dem Zahnrad 16 eingespannt und verdreht das Zahnrad 16, und über den Übertragungsarm des Zahnrads 16 auch den Verriegelungshebel 13, in einer Ruheposition in die Freigabeposition des Verriegelungshebels 13. Das Trägheitsgewicht 17 ist in dem Zahnrad 16 fix eingespannt.

Wenn die Drehgeschwindigkeit der Gurtbandspule 3, beispielsweise bei einer Fahrzeugkollision, rasch zunimmt, weil ein Fahrgast in den Sicherheitsgurt 2 hinein fällt, dann beschleunigt der Mitnehmer 12 mit der Gurtbandspule 3 rasch. Durch das Gewicht des Trägheitsgewichts 17 wirkt eine Trägheitskraft entgegen dieser Beschleunigung, wodurch das Zahnrad 16 entgegen der Federkraft der Drehfeder 18 gegenüber dem Mitnehmer 12 zurück bleibt und den Verriegelungshebel 13 verstellt. Durch die Dimensionierung des Trägheitsgewichts 17 und der Drehfeder 18 ist jene Beschleunigung der Gurtbandspule 3 festgelegt, ab der der Verriegelungshebel 13 durch die Aüslöseeinheit in seine Verriegelungsposition verstellt wird und die weitere Drehung der Gurtbandspule 3 verhindert.

Die Verriegelungseinheit 4 des Sicherheitsgurtaufrollers 1 weist nunmehr weiters eine Endverriegelungssperre auf, die durch einen Abdeckring 19 und ein Ausnehmung A in einem Teil des Umfangs der Gurtbandwelle 9 gebildet ist. Der Abdeckring 19 weist eine Mitnehmernase N auf, die beim Abrollen des Sicherheitsgurtes 2 von der Gurtbandspule 3 an einem ersten Anschlag A1 der Ausnehmung A der Gurtbandwelle 9 anliegt und die beim Aufrollen des Sicherheitsgurtes 2 auf die Gurtbandspule 3 an einem zweiten Anschlag A2 der Ausnehmung A der Gurtbandwelle 9 anliegt. Der Abdeckring 19 weist weiters einen Durchmesser D und eine Höhe H auf, wobei der Abdeckring 19 in einem Kreissegmentabschnitt K nur einen Höhe H1 aufweist. Ein Rand R des Abdeckrings 19 ist somit über den Kreissegmentabschnitt K unterbrochen.

Der Abdeckring 19 weist nunmehr weiters drei Federelemente F auf, die im eingebauten Zustand am Gehäuse schleifend anliegen, wodurch der Abdeckring 19 gegenüber der sich drehenden Gurtbandwelle 9 durch Reibung abgebremst, aber doch zwischen den zwei Anschlägen A1 und A2 mitgedreht wird. Es wird also der Abdeckring 19 im eingebauten Zustand von der sich drehenden Gurtbandwelle 9 so verdreht, dass beim Abrollen die Unterbrechung des Randes R an der Position des Verriegelungshebels 13 zu liegen kommt, dass die Verriegelungszähne VZ des Verriegelungsarms 14 in das Innenzahnrad Z eingreifen und die Gurtbandspule 3 verriegeln können. Beim Aufrollen des Sicherheitsgurtes 2 auf der Gurtbandspule 3 wird nunmehr der Abdeckring 19 von der Gurtbandwelle 9 so verdreht, dass der Rand R zumindest zwischen einem der Verriegelungszähne VZ und dem Innenzahnrad Z zu liegen kommt und ein Verriegeln beim plötzlichen Abstoppen des Aufrollens folglich verhindert ist.

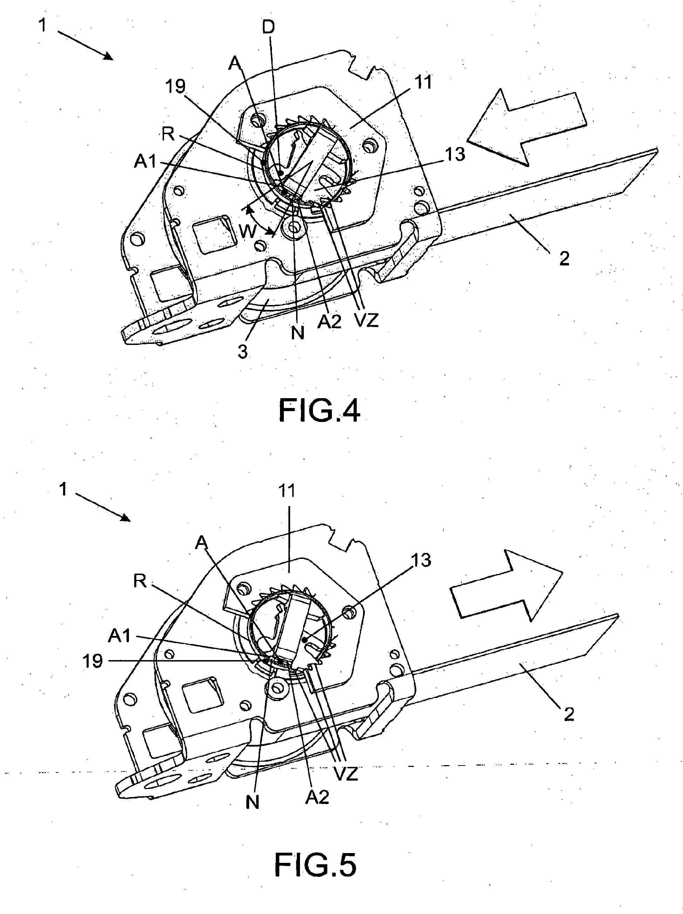

In der Figur 4 ist der bis auf das Gehäuse zusammengebaute Sicherheitsgurtaufroller 1 beim Aufrollen des Sicherheitsgurts 2 auf die Gurtbandspule 3 dargestellt. Der Zahnring 11 ist nur teilweise dargestellt, um den darunter liegenden Abdeckring 19 deutlicher sehen zu können. Die Ausnehmung A am Umfang der Gurtbandwelle 9 weist von dem ersten Anschlag A1 bis zu dem zweiten Anschlag A2 einen Winkelbereich W auf. Beim Aufrollen liegt die Mitnehmernase N des Abdeckrings 19 am zweiten Anschlag A2 an, da der Abdeckring 19 im Uhrzeigersinn entsprechend der Ausnehmung A in der Gurtbandwelle 9 gedreht wurde. In dieser Lage des Abdeckrings 19 befindet sich der Kreissektor K des Abdeckrings 19 in der Abdeckposition, in der der Abdeckring 19 den Bereich zwischen den drei Verriegelungszähnen VZ und dem Innenzahnrad Z zumindest teilweise abdeckt. Tatsächlich sind in Figur 4 nur zwei der drei Verriegelungszähne VZ zu sehen, da der dritte Verriegelungszahn VZ hinter dem Rand R des Abdeckrings 19 liegt weshalb der Verriegelungshebel 13, auch bei sehr abruptem Abstoppen des Aufrollens des Sicherheitsgurts 2, nicht verriegeln kann. Hierdurch ist somit das Auftreten einer Endverriegelung beim Aufrollen des Sicherheitsgurts 2 verhindert.

In der Figur 5 ist der Sicherheitsgurtaufroller 1 gemäß Figur 4 dargestellt, wobei in diesem Fall der Sicherheitsgurt 2 von einem Fahrgast von der Gurtbandspule 3 sehr abrupt, wie bei einer Fahrzeugkollision, abgerollt wurde, weshalb die Verriegelungseinheit 4 das weitere Abrollen verriegelt hat. Die Verriegelungszähne VZ sind in den Zahnlücken des Innenzahnrades Z eingerastet. Diese Verriegelungsposition des Verriegelungshebels 13 wurde dadurch ermöglicht, dass beim Abrollen des Sicherheitsgurts 2 der Abdeckring 19 mit seiner Mitnehmernase N an den ersten Anschlag A1 der Gurtbandwelle 9 verdreht wurde, um den Abdeckring 19 in seine Freigabeposition zu verstellen. Der Abdeckring 19 verhindert somit das normale Verriegeln des Sicherheitsgurtaufrollers 1 beim Abrollen des Sicherheitsgurts 2 nicht, weshalb durch den Abdeckring 19 eine sichere und zuverlässige Konstruktion zur Verhinderung der Endverriegelung beim Aufrollen des Sicherheitsgurtes 2 geschaffen wurde.

Durch die Festlegung des Kreissegmentabschnitts K in einem Winkelbereich von 10 bis 40 Grad und insbesondere von etwa 25 Grad ist eine ausreichende Stabilität des Abdeckrings 19 gewährleistet. Durch das Vorsehen des Verriegelungshebels 13 und des Innenzahnrads Z aus Metall ist der Vorteil erhalten, dass diese Bauteile beim Verriegeln besonders stabil und langlebig sind. Durch das Vorsehen von zwei oder mehreren Verriegelungszähnen ist der Vorteil erhalten, dass die bei einer Fahrzeugkollision beim Verriegeln des Abrollens des Sicherheitsgurtes 2 auftretenden großen Kräfte besser abgeleitet werden können.

Es kann erwähnt werden, dass der Verriegelungshebel auch andere Formen aufweisen könnte, um die beschriebene Funktionalität erfüllen zu können. Ebenso könnte die Auslöseeinheit anders ausgebildet sein, da der erfindungswesentliche Teil in der Endverriegelungssperre durch den Abdeckring gebildet ist. Auch wäre es möglich, dass der Abdeckring keine Mitnehmernase sondern einen Mitnehmerschlitz aufweist, in den eine Mitnehmernase der Gurtbandwelle eingreift.

Es kann erwähnt werden, dass der Abdeckring sowohl aus Metall, als auch aus Kunststoff gefertigt sein kann. Als besonders vorteilhaft hat es sich erwiesen, den Abdeckring aus glasfaserverstärktem Kunststoff, wie beispielsweise PA 6.6 mit 30% Glasfaser, POM mit 30% Glasfaser, auszubilden. Die Verwendung eines solchen Kunststoffes ermöglicht die Realisierung der Federelemente und hilft die Herstellungskosten zu senken.

## Patentansprüche

1. Verriegelungseinheit (4) für einen Sicherheitsgurtaufroller (1), die an einem Ende einer Gurtbandspule (3) des Sicherheitsgurtaufrollers (1) vorgesehen ist, auf der ein Sicherheitsgurt (2) aufgerollt ist, so dass, wenn der Sicherheitsgurt (2) schnell abgerollt wird, ein Verriegelungsarm (14) eines Verriegelungshebels (13) mit einem Innenzahnrad (Z) verriegelt wird, wodurch die Gurtbandspule (3) verriegelt ist, wobei die Verriegelungseinheit (4) folgende Elemente aufweist:
den Verriegelungshebel (13) mit einem von der Mitte der Gurtbandspule (3) entfernt angeordneten Drehpunkt (D), einem Betätigungsarm (15) und dem Verriegelungsarm (14);
eine Auslöseeinheit mit einem Trägheitsgewicht (17), einer Gegendruckfeder (18) und einem Übertragungsarm, der in den Betätigungsarm (15) eingreift, wobei die Auslöseeinheit beim starken Beschleunigen des Abrollens des Sicherheitsgurtes (2), bedingt durch die entgegen der Federkraft der Gegendruckfeder (18) wirkende Trägheitskraft des Trägheitsgewichts (17), zum Verdrehen des Verriegelungshebels (13) um den Drehpunkt (D) und zum Verriegeln des Verriegelungsarms (14) mit dem um den Verriegelungshebel (13) angeordneten stillstehenden Innenzahnrad (Z) ausgebildet ist, **dadurch gekennzeichnet, dass**
zwischen Verriegelungshebel (13) und Innenzahnrad (Z) ein Abdeckring (19) vorgesehen ist, der beim Aufrollen des Sicherheitsgurtes (2) in eine Abdeckposition verdrehbar ist, in der der Abdeckring (19) den Bereich zwischen Verriegelungsarm (14) und Innenzahnrad (Z) zumindest teilweise abdeckt, um ein Verriegeln zu verhindern, und der beim Abrollen des Sicherheitsgurtes (2) in eine Freigabeposition verdrehbar ist, in der der Abdeckring (19) den Bereich zwischen Verriegelungsarm (14) und Innenzahnrad (Z) freigibt, um ein Verriegeln zu ermöglichen.

2. Verriegelungseinheit (4) gemäß Anspruch 1, **dadurch gekennzeichnet, dass** der Abdeckring (19) einen Durchmesser (D) und eine erste Höhe (H) aufweist, wobei der Abdeckring (19) in einem Kreissegmentabschnitt (K) nur eine zweite Höhe (H1) aufweist, um in diesem Kreissegmentabschnitt (K) den Verriegelungsarm (13) zum Verriegeln mit dem Innenzahnrad (Z) freizugeben.

3. Verriegelungseinheit (4) gemäß einem der vorherigen Ansprüche, **dadurch gekennzeichnet, dass** der Kreissegmentabschnitt (K) einen Winkelbereich von 10 bis 40 Grad und insbesondere etwa 25 Grad des Umfangs des Abdeckrings (19) aufweist.

4. Verriegelungseinheit (4) gemäß einem der vorherigen Ansprüche, **dadurch gekennzeichnet, dass** der Verriegelungshebel (13) und das Innenzahnrad (Z) aus Metall gefertigt sind.

5. Verriegelungseinheit (4) gemäß einem der vorherigen Ansprüche, **dadurch gekennzeichnet, dass** der Verriegelungsarm (13) zwei und insbesondere drei Verriegelungszähne (VZ) aufweist, die je zum Eingreifen in eine Zähnlücke des Innenzahnrads (Z) ausgebildet sind.

6. Verriegelungseinheit (4) gemäß einem der vorherigen Ansprüche, **dadurch gekennzeichnet, dass** die Gegendruckfeder (18) durch eine Drehfeder gebildet ist.

7. Verriegelungseinheit (4) gemäß einem der vorherigen Ansprüche, **dadurch gekennzeichnet, dass** der Abdeckring (19) zumindest ein Federelement (F), und insbesondere drei Federelemente (F), aufweist, die am Gehäuse schleifend anliegen, um den Abdeckring (19) je nach Drehrichtung der Gurtbandwelle (9) mit seiner Mitnehmernase (N) zwischen erstem Anschlag (A1) und zweitem Anschlag (A2) zu verdrehen.

8. Verriegelungseinheit (4) gemäß einem der vorherigen Ansprüche, **dadurch gekennzeichnet, dass** der Abdeckring (19) aus Kunststoff, insbesondere aus glasfaserverstärktem Kunststoff gefertigt ist.

9. Sicherheitsgurtaufroller (1) eines Sicherheitsgurtsystems zum Auf- und Abrollen eines Sicherheitsgurtes (2) für einen Fahrgast, **dadurch gekennzeichnet, dass** der Sicherheitsgurtaufroller (1) eine Verriegelungseinheit (4) gemäß einem der Ansprüche 1 bis 8 aufweist.

10. Sicherheitsgurtaufroller (1) gemäß Anspruch 9, **dadurch gekennzeichnet, dass** in der Gurtbandspule (3) eine Gurtbandwelle (9) verdreh sicher vorgesehen ist, an deren der Verriegelungseinheit (4) zugewandtem Ende eine Ausnehmung (A) am Umfang vorgesehen ist, die einen ersten Anschlag (A1) und einen zweiten Anschlag (A2) aufweist, und dass der Abdeckring (19) eine Mitnehmernase (N) aufweist, die in die Ausnehmung (A) der Gurtbandwelle (9) eingreift, wobei die Mitnehmernase (N) beim Abrollen des Sicherheitsgurtes (2) an dem ersten Anschlag (A1) anliegt und beim Aufrollen des Sicherheitsgurts (2) an dem zweiten Anschlag (A2) anliegt.

## Claims

1. A locking unit (4) for a seat belt retractor (1), which locking unit (4) is provided at one end of a seat belt spool (3) of the seat belt retractor (1), on which a safety belt (2) is retracted, so that when the seat belt (2) is quickly unrolled a locking arm (14) of a locking lever (13) is locked with an internal gearwheel (Z), as a result of which the seat belt spool (3) is locked, wherein the locking unit (4) has the following elements:
the locking lever (13) with a centre of rotation (D) arranged spaced apart from the centre of the seat belt spool (3), an actuator arm (15) and the locking arm (14);
a triggering unit having an inertia weight (17), a counter-pressure spring (18) and a transmission arm, which engages with the actuator arm (15), wherein the triggering unit is formed to rotate the locking lever (13) about the centre of rotation (D) and to lock the locking arm (14) with the stationary internal gearwheel (Z) that is arranged about the locking lever (13) in the case of a fast acceleration of the unrolling of the safety belt (2), conditioned by the inertia force of the inertia weight (17) acting against the spring force of the counter-pressure spring (18), **characterized in that**
a cover ring (19) is provided between the locking lever (13) and the internal gearwheel (Z), which cover ring (19) can be rotated into a covering position when the seat belt (2) is retracted, in which covering position the cover ring (19) at least partially covers the region between the locking arm (14) and the internal gearwheel (Z) in order to prevent locking, and which can be rotated into a release position when the seat belt (2) is unrolled, in which release position the cover ring (19) releases the region between the locking arm (14) and the internal gearwheel (Z) in order to permit locking.

2. A locking unit (4) according to claim 1, **characterized in that** a seat belt shaft (9) is provided in the seat belt spool (3) secured against rotation, at the end of which facing the locking unit (4) there is provided a recess (A) at the perimeter, which has a first end stop (A1) and a second end stop (A2), and that the cover ring (19) has a catch lug (N), which engages with the recess (A) of the seat belt shaft (9), wherein the catch lug (N) sits closely at the first end stop (A1) when the seat belt (2) is unrolled and at the second end stop (A2) when the seat belt (2) is retracted.

3. A locking unit (4) according to any of the preceding claims, **characterized in that** the cover ring (19) has a diameter (D) and a first height (H), wherein the cover ring (19) has only a second height (H1) in a segment section of a circle (K) in order to release the locking arm (13) in this segment section of a circle (K) in order to lock with the internal gearwheel (Z).

4. A locking unit (4) according to any of the preceding claims, **characterized in that** the segment section of the circle (K) has an angular range of 10 to 40 degrees and in particular about 25 degrees of the perimeter of the cover ring (19).

5. A locking unit (4) according to any of the preceding claims, **characterized in that** the locking lever (13) and the internal gearwheel (Z) are made of metal.

6. A locking unit (4) according to any of the preceding claims, **characterized in that** the locking arm (13) has two and in particular three locking teeth (VZ), which are in each case configured to engage with a tooth gap of the internal gearwheel (Z).

7. A locking unit (4) according to any of the preceding claims, **characterized in that** the counter-pressure spring (18) is formed by a coil spring.

8. A locking unit (4) according to any of the preceding claims, **characterized in that** the cover ring (19) has at least one spring element (F), and in particular three spring elements (F), which sit edgingly at the housing in order to rotate the cover ring (19) depending on the direction of rotation of the seat belt shaft (9) by means of its catch lug (N) between the first end stop (A1) and the second end stop (A2).

9. A locking unit (4) according to any of the preceding claims, **characterized in that** the cover ring (19) is made from plastic material, in particular from glass fibre reinforced plastic material.

10. A seat belt retractor (1) of a seat belt system for retracting and unrolling a seat belt (2) for a passenger, **characterized in that** the seat belt retractor (1) has a locking unit (4) according to any of claims 1 to 9.

## Revendications

1. Unité de verrouillage (4), pour un enrouleur de ceinture de sécurité (1) qui est prévue à une extrémité d'une bobine de sangle (3) de l'enrouleur de ceinture de sécurité (1), sur laquelle est enroulée une ceinture de sécurité (2), de sorte que, lorsque la ceinture de sécurité (2) est déroulée rapidement, un bras de verrouillage (14) d'un levier de verrouillage (13) est verrouillé avec une roue dentée interne (Z), ce qui provoque le verrouillage de la bobine de sangle (3), l'unité de verrouillage (4) présentant les éléments suivants :
le levier de verrouillage (13), avec un point de rotation (D) disposé éloigné du milieu de la bobine de sangle (3), un bras d'actionnement (15) et un bras de verrouillage (14) ;
une unité de libération avec un poids d'inertie (17), un ressort de contre pression (18) et un bras de transmission qui interpénètre le bras d'actionnement (15), l'unité de libération étant conçue pour la rotation du levier de verrouillage (13) autour du point de rotation (D) et pour le verrouillage du bras de verrouillage (14) avec la roue dentée interne (Z) restant en place disposée autour du levier de verrouillage (13) lors d'une accélération forte du déroulement de la ceinture de sécurité (2), en raison de la force d'inertie agissant contre la force élastique du ressort de contre pression (18), **caractérisée** en ce
qu'une bague de recouvrement (19) est prévue entre le levier de verrouillage (13) et la roue dentée interne (Z), qui peut être mise en rotation vers une position de recouvrement lors de l'enroulement de la ceinture de sécurité (2), position dans laquelle la bague de recouvrement (19) recouvre au moins partiellement la zone entre le bras de verrouillage (14) et la roue dentée interne (Z), afin d'empêcher un verrouillage, et qui peut être mise en rotation vers une position de libération lors du déroulement de la ceinture de sécurité (2), dans laquelle la bague de recouvrement (19) libère la zone entre le bras de verrouillage (14) et la roue dentée interne (Z), afin de permettre un verrouillage.

2. Unité de verrouillage (4) selon la revendication 1, **caractérisée en ce que** la bague de recouvrement (19) présente un diamètre (D) et une première hauteur (H), la bague de recouvrement (19) ne présentant de deuxième hauteur (H1) uniquement dans une portion de segment circulaire (K), afin de libérer le bras de verrouillage (13) dans cette portion de segment circulaire (K) pour le verrouillage avec la roue dentée interne (Z).

3. Unité de verrouillage (4) selon l'une des revendications précédentes, **caractérisée en ce que** la portion de segment circulaire (K) présente une plage angulaire de 10 à 40 grades et notamment d'environ 25 grades sur le périmètre de la bague de recouvrement (19).

4. Unité de verrouillage (4) selon l'une des revendications précédentes, **caractérisée en ce que** le levier de verrouillage (13) et la roue dentée interne (Z) sont fabriqués en métal.

5. Unité de verrouillage (4) selon l'une des revendications précédentes, **caractérisée en ce que** le bras de verrouillage (13) présente deux, et notamment, trois, dents de verrouillage (VZ) qui sont conçues pour interpénétrer dans un espace entre les dents de la roue dentée interne (Z).

6. Unité de verrouillage (4) selon l'une des revendications précédentes, **caractérisée en ce que** le ressort de contre pression (18) est formé par un ressort de compression.

7. Unité de verrouillage (4) selon l'une des revendications précédentes, **caractérisée en ce que** la bague de recouvrement (19) présente au moins un élément élastique (F) et notamment trois éléments élastiques (F), qui sont adjacents avec des frottements au boîtier, afin de mettre en rotation la bague de recouvrement (19) en fonction du sens de rotation de l'arbre de la sangle (9) avec son embout d'entraînement (N) entre une première butée (A1) et une deuxième butée (A2).

8. Unité de verrouillage (4) selon l'une des revendications précédentes, **caractérisée en ce que** la bague de recouvrement (19) est fabriquée en matière plastique, notamment en matière plastique renforcée de fibres de verre.

9. Enrouleur de ceinture de sécurité (1) d'un système de ceintures de sécurité pour l'enroulement et le déroulement d'une ceinture de sécurité (2) destinée à un passager, **caractérisé en ce que** l'enrouleur de ceinture de sécurité (1) présente une unité de verrouillage (4) selon l'une des revendications 1 à 8.

10. Enrouleur de ceinture de sécurité (1) selon la revendication 9, **caractérisé en ce qu'**un arbre de sangle (9)' sécurisé vis-à-vis d'une rotation, est prévu dans la bobine de sangle (3), un évidement (A) est prévu sur le pourtour de l'extrémité orientée vers l'unité de verrouillage (4) de l'arbre, évidement qui présente une première butée (A1) et une deuxième butée (A2), et que la bague de recouvrement (19) présente un embout d'entraînement (N), qui interpénètre dans l'évidement (A) de l'arbre de sangle (9), l'embout d'entraînement (N) étant adjacent à la première butée (A1) lors du déroulement de la ceinture de sécurité (2) et étant adjacent à la deuxième butée (A2) lors de l'enroulement de la ceinture de sécurité (2).
